(19) **Europäisches Patentamt**

**European Patent Office**

**Office européen des brevets**

(11) **EP 0 509 249 B1**

(12) **EUROPÄISCHE PATENTSCHRIFT**

(45) Veröffentlichungstag und Bekanntmachung des Hinweises auf die Patenterteilung:
**05.07.2000 Patentblatt 2000/27**

(51) Int. Cl.$^7$: **G01N 21/35**

(21) Anmeldenummer: **92104444.2**

(22) Anmeldetag: **15.03.1992**

(54) **Verfahren und Vorrichtung zur Gasanalyse**

Method and apparatus for analysing gases

Procédé et appareil d'analyse des gaz

(84) Benannte Vertragsstaaten:
**AT BE CH DE DK ES FR GB GR IT LI NL PT SE**

(30) Priorität: **16.04.1991 DE 4112356**

(43) Veröffentlichungstag der Anmeldung:
**21.10.1992 Patentblatt 1992/43**

(73) Patentinhaber:
**INSTITUT FRESENIUS CHEMISCHE UND BIOLOGISCHE LABORATORIEN GmbH
65232 Taunusstein (DE)**

(72) Erfinder:
- **Kanitz, Jürgen
  Chemiker
  W- 4630 Bochum (DE)**
- **Von Münchow-Pohl, Frank Dr.
  E-Techniker
  W-4630 Bochum (DE)**

(74) Vertreter:
**Weber, Dieter, Dr. et al
Weber, Dieter, Dr.,
Seiffert, Klaus, Dipl.-Phys.,
Lieke, Winfried, Dr.
Postfach 61 45
65051 Wiesbaden (DE)**

(56) Entgegenhaltungen:
**DE-A- 3 116 344          US-A- 3 005 097
US-A- 4 163 899          US-A- 4 500 207**

**Beschreibung**

Die vorliegende Erfindung betrifft ein Verfahren und eine Vorrichtung zur Gasanalyse. Insbesondere betrifft die vorliegende Erfindung ein Verfahren zur Bestimmung von Stoffkonzentrationen in Gasen mittels elektromagnetischer Durchstrahlung und Messung der hindurchgelassenen Strahlungsintensität bei einer für den zu erfassenden Stoff charakteristischen Wellenlänge, wobei das diesen Stoff enthaltende Gas bei mindestens zwei verschiedenen Gasdruckwerten gemessen wird.

Ein solches Verfahren ist aus dem US-Patent US-A-4,500,207 bekannt. Dieses bekannte Verfahren hat jedoch den Nachteil einer erheblich beschränkten Genauigkeit. Bei diesem bekannten Verfahren ist der Meßraum nicht hermetisch dicht abgeschlosen, sondern weist in einer seiner Wände einen porösen Stopfen auf, wobei die Druckänderungen mit Hilfe einer Lautsprechermembran in einer anderen Wand des Meßraumes erzeugt werden. Bei diesem bekannten Verfahren werden die Bedingungen eines konstanten Druckes während einer Messung nur näherungsweise für eine sehr kurze Zeit erreicht und die Druckänderungen können nur sehr klein sein. Auch für die in dieser Druckschrift offenbarte Auswertung der Messungen ist vorausgesetzt, daß die relativen Druckänderungen in dem Meßraum sehr gering sind. Größere Druckänderungen sind auch schon deshalb nicht möglich, weil dann ein Druckausgleich durch den porösen Stopfen stattfinden würde, so daß die Bedingungen eines konstanten Druckes während einer Messung praktisch nicht eingehalten werden können.

Ein weiteres Verfahren zur Gasanalyse ist auch aus der DE-PS 31 16 344 bekannt.

Aus dem US-Patent US-A-4,163,899 ist eine Vorrichtung zur nicht dispersiven photometrischen Gasanalyse bekannt, welche einen elektromagnetischen Strahler und einen entsprechenden Detektor aufweist, zwischen welchen sich das zu analysierende Gas in einem Meßraum befindet, wobei der Meßraum einen Einlaß und einen Auslaß aufweist und Meßraum, Strahler und Detektor räumlich so angeordnet sind, daß ihre relative Lage und der Strahlengang während eines vollständigen Meßzyklus unveränderlich sind.

Diese Vorrichtung arbeitet jedoch nach einem anderen Meßprinzip als es aus der oben genannten US-A-4,500,207 bekannt ist. Die genannte Vorrichtung weist auf der Einlaßseite eines Meßraumes eine pulsierende Pumpe auf, die mit einer festen Frequenz variierende Druckänderungen in dem Meßraum hervorruft. Diese Druckänderungen werden mittels eines Druckwandlers erfaßt und die Schwankungsamplitude des mit der gleichen Frequenz variierenden Intensitätssignales der elektromagnetischen Strahlung wird durch die Amplitude des Druckwandlersignales dividiert. Auf diese Weise wird nur der druckabhängige Teil der elektromagnetischen Strahlung erfaßt, dessen Intensitätsverminderung als proportional zu der jeweiligen Stoffkonzentration angenommen wird. Dieses Meßverfahren erfordert eine Kalibrierung mit einem Gas bekannter Zusammensetzung.

Praktisch jeder denkbare gasförmige Stoff absorbiert elektromagnetische Wellen bei bestimmten, in ihrer Gesamtheit für den Stoff charakteristischen Wellenlängen. In vielen Fällen reicht es für praktische Zwecke aus, bei einer einzigen, festen Wellenlänge zu messen, um anhand der Absorption (bzw. Extinktion) bei dieser Wellenlänge feststellen zu können, daß ein bestimmter Stoff in einer mehr oder weniger großen Konzentration vorhanden ist. Die charakteristischen Wellenlängen liegen für die weitaus meisten Stoffe, die aus mehratomigen Molekülen bestehen, im infraroten Spektralbereich, wobei jedoch grundsätzlich für einschlägige Meßverfahren das gesamte elektromagnetische Spektrum von Mikrowellen bis hin zur Röntgenstrahlung zur Verfügung steht. Wegen der großen praktischen Bedeutung der Infrarotspektroskopie wird jedoch in der folgenden Beschreibung ausschließlich auf das Beispiel der Infrarot-Gasanalyse zurückgegriffen, ohne daß jedoch hierdurch die Erfindung beschränkt werden soll.

Bei dem bekannten Verfahren nach der oben erwähnten DE-PS 31 16 344 wird eine Kalibrierung mit Hilfe bekannter Konzentrationen bzw. Partialdrücke derjenigen Stoffe vorgenommen, deren Konzentration bei der Analyse festgestellt werden soll. Außerdem wird dabei auch die Druckabhängigkeit der Extinktion gemessen. Anschließend wird das zu analysierende Gas bei einem beliebigen Druck gemessen und durch Einordnen des Meßpunktes in eine Kurvenschar der druckabhängigen Extinktionswerte der Partialdruck und damit indirekt auch die Konzentration des Stoffes in dem zu analysierenden Gas festgestellt.

Dieses Verfahren arbeitet zwar mit hoher Genauigkeit, da durch Erfassung der Druckabhängigkeit auch der sogenannte Druckverbreiterungseffekt berücksichtigt wird und entsprechend schmalbandig gemessen werden kann, jedoch ist dieses Verfahren außerordentlich aufwendig, da eine Vielzahl von Kalibrierungsmessungen erforderlich ist, die - zumindest bei größeren Zeitabständen zwischen Messungen - auch mit jeder aktuellen Messung wiederholt werden müssen, um Fehler durch im Laufe der Zeit eintretende Veränderungen (Verschmutzungen, Temperaturschwankungen etc.) zu kompensieren.

Bei anderen bekannten Verfahren findet eine Referenzmessung mit einem, in dem betreffenden Wellenlängenbereich nach Möglichkeit nicht absorbierenden Reingas bzw. dem Trägergas statt, wozu entweder der Meßraum gründlich gespült und/oder komplett ausgetauscht wird. Dabei kann der Austausch des Meßraums auch durch Umlenken des Meßstrahles über Spiegel oder dergleichen erfolgen.

Auch diese bekannten Verfahren sind noch relativ aufwendig und bergen zusätzliche Fehlerquellen in sich, da das Spülen und der vollständige Gasaustausch nicht immer hundertprozentig gelingen kann und auch der Austausch des Meßraumes keine vollständig identischen Meßbedingungen mit der eigentlichen Konzentrationsmessung gewährleistet. Das Problem bei der Verwendung von Referenzgasen liegt auch darin, daß man entsprechende Mengen von Referenzgas bevorraten muß, wobei diese auch in abgeschlossenen Behältern aufbewahrt werden müssen, da ansonsten die eindeutige Zusammensetzung des Referenzgases nicht sichergestellt werden kann. Das Referenzgas muß außerdem eigens hergestellt und/oder bezogen werden. Aus Platzgründen müssen außerdem solche Referenzgase oft unter Druck gesetzt werden, was insofern problematisch ist, als schwerere Fraktionen der Gase auskondensieren können und so die Zusammensetzung der verbleibenden, gasförmigen Bestandteile verändern.

Gegenüber diesem Stand der Technik liegt der vorliegenden Erfindung die Aufgabe zugrunde, ein Verfahren und eine Vorrichtung gemäß dem Oberbegriff der Ansprüche 1 bzw. 9 zu schaffen, welche es ermöglichen, die Konzentration eines Stoffes in einem Gas mit größerer Genauigkeit und ohne Zuhilfenahme von Kalibriergasen zu bestimmen.

Hinsichtlich des Verfahrens wird diese Aufgabe durch die Merkmale des Anspruchs 1 gelöst. Hinsichtlich der Vorrichtung wird diese Aufgabe durch die Merkmale des Anspruchs 9 gelöst.

Gegenüber einigen bekannten Verfahren besteht bei dem erfindungsgemäßen Verfahren also ein wesentlicher Unterschied darin, daß für eine Referenzmessung nicht ein Reingas bzw. reines Trägergas oder ein Gas mit bekannter Konzentration des zu erfassenden Stoffes gemessen wird, sondern daß das zu analysierende Gas selbst, allerdings bei einem anderen bekannten Druck, für die Referenzmessung verwendet wird, wobei außerdem ein bestimmter theoretischer Zusammenhang zwischen der Extinktion, d.h. dem natürlichen Logarithmus des Verhältnisses der gemessenen zur eingestrahlten elektromagnetischen Intensität bei der gemessenen Wellenlänge, und der Volumenkonzentration des absorbierenden Stoffes in dem durchstrahlten Raum unterstellt wird. Außerdem läßt der hermetisch abdichtbare Meßraum größere Druckänderungen zwischen der ersten und zweiten Messung sowie jeweils eine längere Meßdauer zu.

Bei einer bevorzugten Ausgestaltung des erfindungsgemäßen Verfahrens ist dabei der Druck bei der ersten Messung größer als der Druck bei der zweiten Messung, wobei zwischen den beiden Messungen der Druck von dem ersten Wert durch Abpumpen oder Entweichenlassen des zu analysierenden Gases auf den zweiten Druck reduziert wird. Diese Verfahrensweise hat den Vorteil, daß durch das Abpumpen oder (bei Überdruck) Entweichenlassen des im Meßraum vorhandenen Gases keinerlei Änderung der Konzentration des zu erfassenden Stoffes auftreten kann, da keinerlei zusätzliches Gas mit eventuell abweichender Zusammensetzung in den Meßraum hineingelangt.

Aus praktischen Gründen sollte dann der Druck bei der ersten Messung entweder Atmosphärendruck betragen, oder aber wenn das zu analysierende Gas ohnehin unter höherem Druck steht oder eine entsprechende Druckpumpe zur Verfügung steht, bei einem Druck, der größer ist als Atmosphärendruck, während das Reduzieren des Druckes auf den zweiten Druckwert dann entweder durch Ablassen des Überdruckes auf Umgebungsdruck oder aber durch Abpumpen auf einen Wert unterhalb des Atmosphärendruckes erfolgt.

Die Druckdifferenz zwischen den beiden Messungen sollte möglichst groß sein, nach Möglichkeit sollte der Druck bei der zweiten Messung soweit reduziert werden, daß er höchstens die Hälfte des Druckes bei der ersten Messung beträgt.

Die Wahl des Druckes hängt selbstverständlich auch von der Konzentration des zu messenden Stoffes, von seiner spezifischen Absorption und von der Länge der Meßstrecke ab. Mit anderen Worten: Wenn die Stoffkonzentration sehr niedrig und/oder die Meßstrecke sehr kurz und/oder die Absorption des betreffenden Stoffes relativ gering ist, so sollte die erste Messung bei möglichst hohem Überdruck stattfinden, damit die Extinktion überhaupt meßbar bzw. mit ausreichender Genauigkeit meßbar wird. Ist umgekehrt die zu messende Stoffkonzentration hoch und/oder die Meßstrecke lang und/oder die spezifische Absorption des betreffenden Stoffes sehr hoch, so kann eine Messung auch bei erheblich niedrigerem Druck stattfinden. Falls gewünscht oder aufgrund der Umstände einfacher zu verwirklichen, können sowohl die erste als auch die zweite Messung in einem solchen Fall bei einem Druck unterhalb des Atmosphärendruckes stattfinden.

Für die Konzentrationsermittlung kann man im einfachsten Fall das sogenannte Lambert-Beer'sche Gesetz zugrundelegen, das einen einfachen exponentiellen Abfall der gemessenen Intensität mit der Konzentration zugrundelegt.

Für praktische Zwecke haben sich jedoch empirische Funktionen als zweckmäßiger erwiesen, die den tatsächlichen Verlauf der durchgelassenen Intensität in Abhängigkeit von der Konzentration genauer wiedergeben als das Lambert-Beer'sche Gesetz. Bei der bevorzugten Ausgestaltung des Verfahrens wird für den Zusammenhang zwischen durchgelassener Intensität und Konzentration eine Beziehung der Formel

$$I/I_o = a \cdot \exp(b \cdot x) + (1 - a) \cdot \exp(c \cdot x)$$

angenommen, wobei a, b und c stoffabhängige Konstanten und x die Volumenkonzentration des Stoffes sind.

Durch Messung bei zwei verschiedenen Druckwerten kann man gemäß der obigen Beziehung die Konzentration x des Stoffes ermitteln, da aufgrund der beiden bekannten Druckwerte zumindest auch das Verhältnis der Volumenkonzentrationen bekannt ist, indem man die allgemeine Zustandsgleichung für ideale Gase (gegebenenfalls auch für reale Gase) zugrundelegt. Bei Luft als Trägergas, Zimmertemperatur und Atmosphärendruck kann man in guter Näherung die Volumenkonzentration als proportional zum Druck annehmen (ideales Gas).

In weiterer Ausgestaltung der Erfindung ist vorgesehen, daß die Messungen bei den verschiedenen Drükken im periodischen Wechsel erfolgen, so daß auch eine statistische Mittelung stattfinden kann.

Außerdem ist die Verwendung des Wechsellichtprinzips zweckmäßig, zumindest wenn man im Infrarotbereich und bei Zimmertemperatur mißt, da bei Zimmertemperatur bereits ein erheblicher Infrarotuntergrund vorgefunden wird, der durch die Wechsellichtmessung eliminiert wird.

Außerdem ist es zweckmäßig, neben dem Druck auch die Temperatur im Meßraum zu erfassen und gegebenenfalls eine rechnerische Druckkorrektur vorzunehmen, wenn die Temperaturen zwischen den Messungen bei verschiedenen Drücken deutlich voneinander abweichen. Allein durch Aufbauen eines Überdruckes bzw. durch Abpumpen und Erzielen eines Unterdrucks kann in dem Gas im Meßraum eine erhebliche Temperaturänderung stattfinden, die rechnerisch nach dem oben erwähnten Gasgesetz korrigiert werden muß, da ansonsten der eindeutige Zusammenhang zwischen Druck und Konzentration nur bei konstanter Temperatur gilt. Alternativ ist es jedoch auch möglich, mit der Messung solange zu warten, bis ein Temperaturausgleich stattgefunden hat, der in volumenmäßig kleinen Meßräumen auch relativ schnell erfolgt. Auch hierfür ist jedoch ein Temperaturfühler zweckmäßig, da er den Temperaturausgleich anzeigt. Um einen schnelleren Temperaturausgleich zu erreichen, kann das Gas auch beim Einlaufen in die Küvette auf einen konstanten Wert vorgeheizt werden, gegebenenfalls kann auch die Küvette selbst auf konstanter Temperatur gehalten werden.

Bei der erfindungsgemäßen Vorrichtung ist die Auslaufseite des Meßraumes mit einer Pumpe verbunden, während der Einlaß durch ein Ventil verschließbar ist. Außerdem ist ein Druckfühler zum Messen des Druckes im Meßraum vorgesehen und der Strahler weist eine stabilisierte Spannungsversorgung auf.

Dabei sind Meßraum, Strahler und Detektor derart angeordnet, daß ihre relative Lage und auch der Verlauf des Strahlenganges während eines vollständigen Meßzylkus räumlich unverändert bleibt. In negativer Formulierung könnte man auch sagen, daß bei der erfindungsgemäßen Vorrichtung keinerlei Einrichtungen zum Umlenken des Infrarotstrahls, keinerlei Einrichtungen zum Austausch des Meßraumes und auch keine Einrichtungen für den Austausch des zu analysierenden Gases gegen ein Referenz- oder Kalibrierungsgas vorgesehen sind, wohl aber Einrichtungen, die es ermöglichen, das zu analysierende Gas nacheinander bei mindestens zwei verschiedenen konstanten Drücken im Meßraum zu halten.

Zweckmäßigerweise ist außerdem ein Steuergerät mit einer Zeitmeßeinrichtung vorgesehen. welches die einzelnen Komponenten des Systems in der gewünschten zeitlichen Reihenfolge steuert, so daß zunächst das zu analysierende Gas in den Meßraum eingebracht wird, dann bei konstantem Druck eine erste Messung erfolgt, der Meßvorgang beendet und der Druck geändert wird, gegebenenfalls eine Kontrolle der Temperatur und des Druckes erfolgt und dann bei einem konstanten zweiten Druck die zweite Messung erfolgt, woraufhin der gesamte Meßzyklus wiederholt werden kann. Hierzu schaltet das Steuergerät die vorhandenen Pumpen und Ventile sowie die Erfassungseinrichtung für das Meßsystem bzw. den Detektor, wobei die Umschaltungen entweder nur in Abhängigkeit von der Zeit, gegebenenfalls jedoch auch in Abhängigkeit von dem erreichten Druck und/oder der Temperatur als zusätzliches Kriterium stattfinden, durch welches insbesondere der Zeitabschnitt, der für die Reduzierung des Druckes vorgesehen ist, gegebenenfalls verlängert werden kann, bis der gewünschte Druck und/oder die gewünschte Temperatur erreicht sind.

Bevorzugt ist eine Ausführungsform der Erfindung, bei welcher Heizeinrichtungen am Einlaß der Küvette und/oder an der Küvette selbst vorgesehen sind. Selbstverständlich kann auch der Auslaß mit entsprechenden Heizeinrichtungen versehen werden. Mit derartigen Heizeinrichtungen und einer entsprechenden Thermostatsteuerung kann die Küvette immer auf konstanter Temperatur gehalten werden, so daß auch das Gas darin unabhängig vom jeweiligen Druck in sehr kurzer Zeit diese Temperatur annimmt. Dies gilt insbesondere, wenn der Gaseinlauf geheizt wird und einen relativ engen Durchflußquerschnitt hat Zweckmäßigerweise bestehen dabei der Einlaß und auch die Seitenwand der Küvette aus einem gut wärmeleitfähigen Material, im allgemeinen Metall. Es versteht sich, daß die Stirnseiten der Küvette mit strahlungsdurchlässigen Fenstern versehen sind. Für einen schnellen Temperaturausgleich werden zweckmäßigerweise auch die Querabmessungen der Küvette entsprechend gering gehalten, so daß das entsprechend kleine Gasvolumen schnell temperiert ist

Weitere Vorteile, Merkmale und Anwendungsmöglichkeiten der vorliegenden Erfindung werden deutlich anhand der folgenden Beschreibung der Figuren, die bevorzugte Ausgestaltungen der Erfindung darstellen. Es zeigen:

Figur 1    ein Schema der erfindungsgemäßen Vorrichtung,
Figur 2    den schematischen Ablauf eines Meßzyklus und
Figur 3    den relativen Intensitätsverlauf der Strahlung in Abhängigkeit von der Konzentration der absorbierenden Komponente in dem zu untersuchenden Gas und dem Druck.

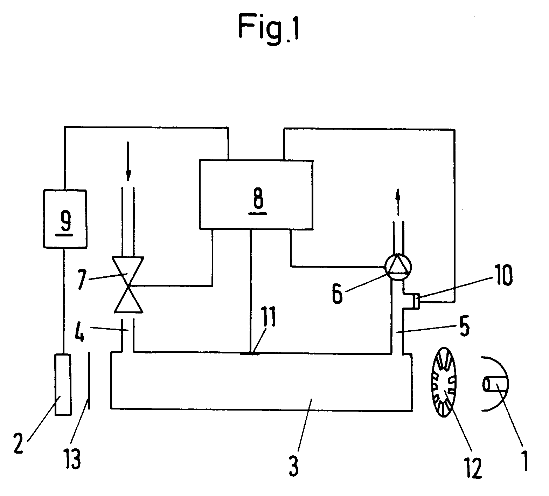

In Figur 1 erkennt man den Strahler 1, welcher den Meßraum 3 in Form einer Küvette durchstrahlt, wobei die durchgehende Strahlung von dem Detektor 2 erfaßt wird. Schematisch sind noch dargestellt ein Chopper 12 und ein Filter 13, wobei der Filter 13 nur die Strahlung hindurchläßt, die mit der Chopperfrequenz moduliert ist, so daß der gesamte Infrarothintergrund eliminiert wird und der Detektor 2 nur das von dem Infrarotstrahler 1 ausgehende und durch den Chopper modulierte Licht empfängt. Der Meßraum bzw. die Küvette 3 hat einen Einlaß 4, der durch ein Magnetventil 7 verschließbar ist und einen Auslaß 5, der mit einer Vakuumpumpe 6 verbunden ist. In dem zwischen Ventil 7 und Pumpe 6 eingeschlossenen Volumen befindet sich ein Druckfühler 10, und zwar im Auslaßstutzen 5, sowie ein Temperaturfühler 11 in direktem Kontakt mit dem Gas in der Küvette 3, der jedoch durch nicht dargestellte Mittel vor der direkten Infrarotbestrahlung aus dem Strahler 1 geschützt ist Wahlweise kann der Temperaturfühler 11 auch im Einlaßstutzen 4 oder dem Auslaßstutzen 5 angeordnet sein.

Der Detektor 2 ist mit einer Meßelektronik 9 verbunden, welche die vom Detektor 2 erfaßten Intensitätswerte der Infrarotstrahler registriert. Das gesamte System wirdvon einem Steuergerät 8 gesteuert, welches auch eine Zeitmeßeinrichtung umfaßt.

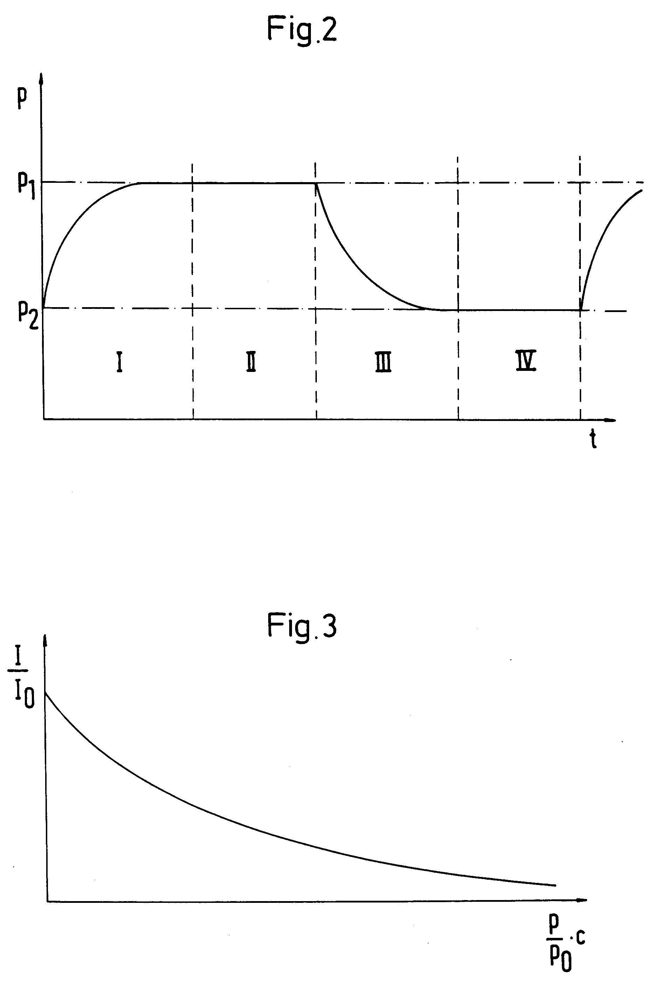

Die Steuerung der Vorrichtung gemäß Figur 1 wird am besten anhand des Ablaufdiagrammes gemäß Figur 2 beschrieben. In dem Diagramm der Figur 2 ist entlang der horizontalen Achse die Zeit t und entlang der vertikalen Achse der Druck p in der Küvette 3 aufgetragen. Es lassen sich im wesentlichen vier mit 1 bis IV gekennzeichnete Phasen unterscheiden. Zu Beginn eines Meßzyklus wird durch Öffnen des Ventils 7 der Einlaßstutzen 4 der Küvette 3 mit einer Quelle des zu untersuchenden Gases verbunden. Sofern noch keine Messung mit dem gleichen Gas vorangegangen ist, kann dabei zunächst auch die Pumpe 6 in Betrieb sein, um die Küvette 3 zu Beginn der ersten Messung zu spülen. Nach einem etwaigen Spülvorgang ist die Pumpe 6 ausgeschaltet.

Sobald der Druck in der Küvette 3 einen gewünschten Wert erreicht hat oder der Druckausgleich mit der Gasquelle hergestellt ist, wird das Ventil 7 geschlossen (es könnte bei konstantem Druck der Quelle zunächst auch noch offen bleiben). Dieses Befüllen der Küvette und das Erreichen des konstanten Druckwertes p1 ist in Figur 2 als Phase I gekennzeichnet. Dann beginnt die Meßphase, indem das Steuergerät 8 die Meßelektronik 9 veranlaßt, nunmehr die von dem Detektor 2 erfaßten Werte zu registrieren. Dabei registrieren das Steuergerät bzw. die Meßelektronik gleichzeitig auch den vom Fühler 10 erfaßten Druck und gegebenenfalls auch die vom Fühler 11 erfaßte Temperatur.

Diese Phase ist in Figur 2 mit II gekennzeichnet.

Sofern das Ventil 7 nicht schon vorher geschlossen wurde, wird spätestens zum Abschluß der Phase II das Magnetventil 7 durch das Steuergerät 8 geschlossen. Anschließend wird in der Phase III die Pumpe 6 in Betrieb genommen und das Gas aus der Küvette 3 bis auf einen Druck p2 abgepumpt. In dem Ablaufdiagramm gemäß Figur 2 beträgt der Druckwert p2 etwa die Hälfte des Druckes p1, erkann jedoch auch wesentlich geringer sein. Bei Erreichen des Druckes p2 am Ende der Phase III wird die Pumpe abgeschaltet. Sofern die Bauart der Pumpe einen Rückfluß von Gas nicht ausschließt, sollte im Stutzen 5 vor der Pumpe 6 ebenfalls ein Ventil angeordnet werden, welches von dem Steuergerät 8 zum Ende der Phase III gegebenenfalls geschlossen werden kann.

Sofern das Pumpen langsam erfolgt ist, sollte ein nennenswerte Temperaturänderung nicht registriert werden. Sollte eine Temperaturänderung in der Küvette 3 dennoch stattgefunden haben, so kann wahlweise die Phase III bei abgeschalteter Pumpe solange ausgedehnt werden, bis ein Temperaturausgleich stattgefunden hat. Alternativ kann jedoch auch die vom Fühler 11 registrierte Temperatur über das Steuergerät erfaßt und rechnerisch durch eine Korrektur des vom Fühler 10 gemessenen Druckes berücksichtigt werden.

Das Gas kann außerdem schon am Einlaß und ansonsten auch durch die Küvettenwand temperiert werden, in dem diese thermostatgesteuert auf einen festen Wert vorgeheizt werden. Der Temperaturausgleich erfolgt vor allem auch dann relativ schnell, wenn die Wand der Küvette und/oder des Ein- und Auslasses aus gut wärmeleitfähigem Material bestehen und wenn das Gesamtvolumen der Anordnung relativ klein ist, die Küvette also geringe Querabmessungen hat.

Sobald die Phase III abgeschlossen ist und ein konstanter Druck p2 erreicht ist, veranlaßt das Steuergerät 8 die Meßelektronik 9 wiederum, die vom Detektor 2 erfaßten Intensitätswerte der Infrarotstrahlung zu registrieren. Diese Phase ist in Figur 2 mit IV gekennzeichnet. Unter der Voraussetzung, daß bei beiden Messungen die gleiche Temperatur gemessen wurde und bei den gegebenen Druck- und Temperaturverhältnissen die Zustandsgleichung für ideale Gase anwendbar ist, kann der Intensitätsverlauf in Abhängigkeit von der Konzentration und dem Druck in sehr guter Näherung wiedergegeben werden durch die folgende Gleichung:

$$\frac{I}{I_0} = f(p \cdot c) = f\left(\frac{p}{p_0} \cdot c\right)$$

$$= a_1 \exp\left(-a_2 \frac{p}{p_0} c\right) + (1 - a_1) \exp\left(-a_3 \frac{p}{p_0} c\right) \quad ,$$

wobei c die (relative) Konzentration des Stoffes beim Druck $p_0$, p der aktuelle Druck und $a_1$, $a_2$ und $a_3$ Konstanten sind.

Der Verlauf dieser Kurve istin Figur 3 schematisch wiedergegeben, wobei für ein gegebenes und sich nicht veränderndes Gas die Konzentration selbstverständlich als konstant anzusetzen ist. Entsprechende Kurven für verschiedene Konzentrationen unterscheiden sich nur durch einen festen Faktor, der die Kurve in horizontaler Richtung streckt oder staucht.

Da die Konstanten der oben angegebenen Funktion durch eine einmalige Kalibrierungsmessung ermittelt werden können, ist die Kurve durch Messung zweier Punkte bei verschiedenen Drücken eindeutig festgelegt und damit auch die gesuchte Konzentration der zu erfassenden Gaskomponente. In der Praxis wird die Konzentration aus der obigen Gleichung mit Hilfe numerischer Näherungsverfahren ermittelt.

Mit Hilfe der vorliegenden Erfindung ist ein besonders einfaches und dennoch relativ genaues photometrisches Gasanalyseverfahren geschaffen werden, wobei sich auch die entsprechende Vorrichtung durch einen besonders einfachen Aufbau auszeichnet, da weder ein Umlenken des Infrarot-Meßstrahles noch ein Austausch der Meßküvetten noch ein Austausch des Gases mit Eich- oder Kalibriergas erforderlich sind.

Damit sind gleichzeitig auch eine Reihe von Fehlerquellen eliminiert, die vor allem durch langfristige Veränderungen des Meßuntergrundes verursacht werden können, wie z.B. sich allmählich verschmutzende Fenster bei auszutauschenden Küvetten, sich allmählich ändernde Temperaturen und zeilliche Veränderungen von Strahler und Detektor, die bei den kurz aufeinanderfolgenden Meßvorgängen gemäß der vorliegenden Erfindung nicht ins Gewicht fallen können.

Bezugszeichenliste

| | |
|---|---|
| 1 | Strahler |
| 2 | Detektor |
| 3 | Meßraum, Küvette |
| 4 | Einlaßstutzen |
| 5 | Auslaßstutzen |
| 6 | Vakuumpumpe |
| 7 | Magnetventil |
| 8 | Steuergerät |
| 9 | Meßelektronik |
| 10 | Druckfühler |
| 11 | Temperaturfühler |
| 12 | Chopper |
| 13 | Filter |
| t | Zeit |
| p | Druck |
| I, II, III, IV | Phasen |

**Patentansprüche**

1. Verfahren zur Bestimmung von Stoffkonzentrationen in Gasen mittels elektromagnetischer Durchstrahlung und Messung der hindurchgelassenen Strahlungsintensität bei einer für den zu erfassenden Stoff charakteristischen Wellenlänge, wobei das den Stoff enthaltende Gas bei mindestens zwei verschiedenen Gasdruckwerten und bei identischer Meßanordnung gemessen wird, und wobei ein Meßraum über einen Einlaß mit einer Quelle des zu untersuchenden Gases verbunden wird, dadurch gekennzeichnet, daß in dem dicht abgeschlossenen Meßraum eine erste Messung bei einem konstanten ersten Druck des Gases stattfindet, anschließend der Gasdruck in dem durch ein Ventil am Einlaß abgeschlossenen Meßraum durch Abpumpen mittels einer Pumpe am Auslaß vermindert wird, woraufhin der Meßraum durch die abgeschaltete Pumpe oder ein weiteres Ventil an dem Auslaß dicht abgeschlossen wird und eine zweite Messung bei einem zweiten konstanten, niedrigeren Gasdruck stattfindet, wobei der erste und der zweite Druck gemessen werden, und daß aus dem Verhältnis bzw. der Differenz der gemessenen Intensitäten unter Zugrundelegung eines theoretischen Zusammenhangs zwischen der Extinktion und der Volumenkonzentration des zu erfassenden Stoffes die Konzentration desselben in dem gemessenen Gas rechnerisch oder grafisch ermittelt wird.

2. Verfahren nach Anspruch 2, dadurch gekennzeichnet, daß der Druck bei der ersten Messung größer oder gleich dem äußeren Atmosphärendruck ist und daß der Druck bei der zweiten Messung kleiner oder gleich dem äußeren Atmosphärendruck ist.

3. Verfahren nach Anspruch 2, dadurch gekennzeichnet, daß der Druck bei der zweiten Messung kleiner ist als die Hälfte des Druckes bei der ersten Messung.

4. Verfahren nach einem der Ansprüche 1 bis 3, dadurch gekennzeichnet, daß der theoretische Zusammenhang zwischen Extinktion und Volumenkonzentration des Stoffes dem Lambert-Beer'schen Gesetz entspricht.

5. Verfahren nach einem der Ansprüche 1 bis 3, dadurch gekennzeichnet, daß der theoretische Zusammenhang zwischen Extinktion und Volumenkonzentration des Stoffes einer empirisch ermittelten Funktion entspricht.

6. Verfahren nach einem der Ansprüche 1 bis 5, dadurch gekennzeichnet, daß die Messungen im periodischen Wechsel erfolgen.

7. Verfahren nach einem der Ansprüche 1 bis 6, dadurch gekennzeichnet, daß das Prinzip der Wechsellichtmessung verwendet wird.

8. Verfahren nach einem der Ansprüche 1 bis 7, dadurch gekennzeichnet, daß neben dem Druck auch die Temperatur im Meßraum erfaßt wird und gegebenenfalls eine rechnerische Druckkorrektur vorgenommen wird, wenn die Temperaturdifferenz zwischen der ersten und der zweiten Messung einen vorgegebenen Grenzwert übersteigt.

9. Vorrichtung zur nicht dispersiven fotometrischen Gasanalyse mit einem elektromagnetischen Strahler (1) und einem entsprechenden Detektor (2), zwischen welchen sich das zu analysierende Gas in einem Meßraum (3) befindet, wobei der Meßraum (3) einen Einlaß (4) und einen Auslaß (5) aufweist und Meßraum (3), Strahler (1) und Detektor (2) räumlich so zueinander angeordnet sind, daß ihre relative Lage und der Strahlengang während eines vollständigen Meßzyklus unveränderlich sind, dadurch gekennzeichnet, daß die Auslaßseite des Meßraumes (3) mit einer Pumpe (6) verbunden ist, die im ausgeschalteten Zustand gegen Gasrückstrom dicht oder auf der Auslaßseite des Meßraumes durch ein verschließbares Ventil von diesem Meßraum trennbar ist, daß der Einlaß durch ein daran vorgesehenes Ventil (7) verschließbar ist, ein Druckfühler (10) zum Messen des Druckes im Meßraum vorgesehen ist und der Strahler (1) eine stabilisierte Spannungsversorgung aufweist.

10. Vorrichtung nach Anspruch 9, dadurch gekennzeichnet, daß sie ein Steuergerät (8) aufweist mit einer Zeitmeßeinrichtung (9), wobei das Steuergerät mit dem Ventil, der Pumpe und einer Erfassungseinrichtung für die Detektormeßwerte verbunden ist, um diese in Abhängigkeit von der Zeit während eines Meßzyklus periodisch nacheinander zu schalten.

11. Vorrichtung nach Anspruch 10, dadurch gekennzeichnet, daß das Steuerungsgerät mit dem Druckfühler (10) verbunden ist, um eine Messung in Abhängigkeit vom erreichten Druck zu starten.

12. Vorrichtung nach Anspruch 10 oder 11, dadurch gekennzeichnet, daß das Steuerungsgerät (8) mit einem Temperaturfühler (11) verbunden ist, welcher in thermischen Kontakt mit dem Meßraum (3) steht.

13. Vorrichtung nach einem der Ansprüche 9 bis 12, dadurch gekennzeichnet, daß Einrichtungen zum Heizen der Küvette (3) und/oder des Einlasses (4) vorgesehen sind und daß Küvette (3) und vorzugsweise auch der Einlaß (4) aus einem gut wärmeleitenden Material bestehen.

**Claims**

1. A method of determining levels of substance concentration in gases by means of electromagnetic transmission radiation and measurement of the transmitted radiation intensity at a wavelength characteristic of the substance to be detected, wherein the gas containing the substance is measured at at least two different gas pressure values and with an identical measurement arrangement, and wherein a measurement chamber is connected by way of an inlet to a source of the gas to be investigated, characterised in that a first measurement procedure at a constant first pressure of the gas takes place in the sealingly closed measurement chamber, then the gas pressure in the measurement chamber which is closed by a valve at the inlet is reduced by pumping out by means of a pump at the outlet, whereupon the measurement chamber is sealingly closed by the pump being switched off or a further valve at the outlet and a second measurement procedure takes place at a second constant lower gas pressure, wherein the first and the second pressures are measured, and that the concentration of the substance to be detected in the measured gas is ascertained by calculation or graph from the relationship or the difference of the measured intensities based on a theoretical connection between extinction and the concentration by volume of the substance to be detected.

2. A method according to claim 1 characterised in that the pressure in the first measurement procedure is greater than or equal to the external atmospheric pressure and that the pressure in the second measurement procedure is less than or equal to the external atmospheric pressure.

3. A method according to claim 2 characterised in that the pressure in the second measurement procedure is less than half the pressure in the first measurement procedure.

4. A method according to one of claims 1 to 3 characterised in that the theoretical connection between extinction and concentration by volume of the substance corresponds to Lambert-Beer's law.

5. A method according to one of claims 1 to 3 characterised in that the theoretical connection between extinction and concentration by volume of the substance corresponds to an empirically ascertained function.

6. A method according to one of claims 1 to 5 characterised in that the measurement procedures take place in periodic alternation.

7. A method according to one of claims 1 to 6 characterised in that the principle of alternating light measurement is used.

8. A method according to one of claims 1 to 7 characterised in that besides pressure the temperature in the measurement chamber is also detected and possibly a pressure correction is implemented by calculation if the temperature difference between the first and the second measurement procedures exceeds a predetermined limit value.

9. Apparatus for non-dispersive photometric gas analysis with an electromagnetic radiating device (1) and a corresponding detector (2), between which is disposed the gas to be analysed in a measurement chamber (3), wherein the measurement chamber (3) has an inlet (4) and an outlet (5) and the measurement chamber (3), the radiating device (1) and the detector (2) are spatially so arranged relative to each other that their relative position and the beam path are invariable during a complete measurement cycle, characterised in that the outlet side of the measurement chamber (3) is connected to a pump (6) which can be separated from said measurement chamber in the switched-off condition sealingly in relation to a return flow of gas or on the outlet side of the measurement chamber by a closable valve, that the inlet is closable by a valve (7) provided thereat, there is provided a pressure sensor (10) for measuring the pressure in the measurement chamber, and the radiating device (1) has a stabilised voltage supply.

10. Apparatus according to claim 9 characterised in that it has a control device (8) with a timing device (9), wherein the control device is connected to the valve, the pump and an acquisition device for the detector measurement values in order to periodically successively switch same in dependence on time during a measurement cycle.

11. Apparatus according to claim 10 characterised in that the control device is connected to the pressure sensor (10) in order to start a measurement in dependence on the pressure reached.

12. Apparatus according to claim 10 or claim 11 characterised in that the control device (8) is connected to a temperature sensor (11) which is in thermal contact with the measurement chamber (3).

13. Apparatus according to one of claims 9 to 12 characterised in that there are provided devices for heating the vessel (3) and/or the inlet (4) and that the vessel (3) and preferably also the inlet (4) comprise a material which is a good thermal conductor.

**Revendications**

1. Procédé pour déterminer des concentrations de substances dans des gaz par envoi d'un rayonnement électromagnétique et mesure de l'intensité du rayonnement traversant à une longueur d'onde caractéristique de la substance à détecter, le gaz contenant la substance étant soumis à la mesure sous au moins deux valeurs différentes de la pression du gaz et avec un montage de mesure identique, un espace de mesure communiquant, par l'intermédiaire d'un orifice d'entrée, avec une source du gaz à étudier, caractérisé en ce qu'une première mesure est effectuée dans l'espace de mesure, obturé d'une manière étanche, sous une première pression constante du gaz, puis on diminue la pression du gaz dans l'espace de mesure obturé par une vanne à son orifice d'entrée, par pompage à l'aide d'une pompe en sortie, ce après quoi on obture d'une manière étanche l'espace de mesure, en coupant la pompe, ou en utilisant une vanne additionnelle au niveau de l'orifice de sortie, et on procède à une deuxième mesure, sous une deuxième pression du gaz, constante et plus faible, en mesurant la première et la deuxième pressions, et en ce que, à partir du rapport ou de la différence des intensités mesurées, en utilisant une relation théorique entre l'extinction et la concentration volumique de la substance à détecter, on détermine, par le calcul ou par un graphique la concentration de cette dernière dans le gaz ayant fait l'objet de la mesure.

2. Procédé selon la revendication 1, caractérisé en ce que la pression lors de la première mesure est supérieure ou égale à la pression atmosphérique extérieure, et que la pression lors de la deuxième mesure est inférieure ou égale à la pression atmosphérique extérieure.

3. Procédé selon la revendication 2, caractérisé en ce que la pression lors de la deuxième mesure est inférieure à la moitié de la pression lors de la première mesure.

4. Procédé selon l'une des revendications 1 à 3, caractérisé en ce que la relation théorique entre l'extinction et la concentration volumique de la substance correspond à la loi de Lambert.

5. Procédé selon l'une des revendications 1 à 3, caractérisé en ce que la relation théorique entre l'extinction et la concentration volumique de la substance correspond à une fonction déterminée d'une manière empirique.

6. Procédé selon l'une des revendications 1 à 5, caractérisé en ce que les mesures s'effectuent selon une alternance périodique.

7. Procédé selon l'une des revendications 1 à 6, caractérisé en ce que l'on utilise le principe d'une mesure en lumière alternée.

8. Procédé selon l'une des revendications 1 à 7, caractérisé en ce que, outre la pression, on détermine aussi la température dans l'espace de mesure, et on procède éventuellement à une correction de la pression quand la différence de température entre la première mesure et la deuxième mesure dépasse une valeur limite prédéfinie.

9. Appareil pour l'analyse photométrique non-dispersive des gaz, comportant un radiateur électromagnétique (1) et un détecteur correspondant (2), entre lesquels le gaz à analyser se trouve dans un espace de mesure (3), l'espace de mesure (3) comportant un orifice d'entrée (4) et un orifice de sortie (5), et l'espace de mesure (3), le radiateur (1) et le détecteur (2) étant dans l'espace, disposés l'un par rapport à l'autre de telle sorte que leurs positions relatives et le trajet des rayons restent inchangés pendant la totalité d'un cycle de mesure, caractérisé en ce que le côté sortie de l'espace de mesure (3) communique avec une pompe (6), qui quand elle est à l'arrêt peut être séparée de l'espace de mesure, d'une manière étanche vis-à-vis du courant de retour du gaz, ou encore sur le côté sortie de l'espace de mesure, grâce à une vanne pouvant être obturée; que l'orifice d'entrée peut être obturé par une vanne (7) qui y est disposée; qu'un capteur de pression (10) destiné à mesurer la pression est prévu dans l'espace de mesure; et que le radiateur (1) présente une alimentation en tension stabilisée.

10. Appareil selon la revendication 9, caractérisé en ce qu'il comporte un appareil de commande (8), avec un dispositif de chronométrage (9), l'appareil de commande étant relié à la vanne, à la pompe et à un dispositif de détection des valeurs de mesure du détecteur, pour les mettre en circuit périodiquement les unes après les autres pendant un cycle de mesure en fonction du temps.

11. Appareil selon la revendication 10, caractérisé en ce que l'appareil de commande est relié à un capteur de pression (10), pour lancer une mesure en fonction de la pression atteinte.

12. Appareil selon la revendication 10 ou 11, caractérisé en ce que l'appareil de commande (8) est relié à un capteur de température (11), qui est en contact thermique avec l'espace de mesure (3).

13. Appareil selon l'une des revendications 9 à 12, caractérisé en ce que des dispositifs sont prévus pour chauffer la cuvette (3) et/ou l'orifice d'entrée (4), et que la cuvette (3) et de préférence aussi l'orifice d'entrée (4) sont constitués d'un matériau bon conducteur de la chaleur.

# Fig.1

## Fig.2

## Fig.3